# EUROPEAN PATENT APPLICATION

(11) **EP 1 085 730 A1**
(43) Date of publication of application: **21.03.2001**
(21) Application number: 00117092.7
(22) Date of filing: 09.08.2000
(51) Int. Cl.: H04M 1/725, H04M 1/02

(54) **Access control method to the functionality of a portable communication device utilizing a key battery**

(30) Priority: 20.09.1999 US 398303
(71) Applicant: MOTOROLA, INC., Schaumburg, IL 60196 (US)
(72) Inventor: Pinder, Ellis Arthur, Davie, Florida 33324 (US)
(74) Representative: Morgan, Marc

(57) **Abstract**

An access control system (100) for enabling functionality to a portable communications device includes a battery (120) for providing access control data to the portable communications device such as a portable two-way radio transceiver (110). A data connection (150) connected between the battery (120) and the portable two-way radio transceiver (110) provides control data to radio (110) and enables access to a predetermined set of device functions.

## Description

### TECHNICAL FIELD

This invention relates in general to two-way radio and more particularly to controlling access to functionality by means of a key battery.

### BACKGROUND

It is not uncommon for certain features or capabilities of a portable communication device to be restricted from general use. Such features or capabilities may be appropriate for only users with authorization or appropriate training. A general feature set would be available to all users, but an extended feature set, including one or more restricted features or capabilities, would be available to select users through the use of an access control mechanism.

A common method employed to restrict access to radio functionality is a password. Correct entry of a password will enable access to one or more restricted features. Although the password technique is easy to implement and use, it does have a security disadvantage. If the password is learned by an unauthorized party, it can be used to gain unauthorized access until the radio is re-programmed with a new password. Due to practical considerations, it is typical for a group or "fleet" of radios to have the same access password, so a compromised password could be used against any radio. In such a case, the security disadvantage of the password access method is a serious concern.

An alternate method involves the use of a hardware key that attaches to the device. When the radio detects the presence of a valid hardware key, the radio will allow access to restricted features. This technique offers some improvement over a password-only scheme, because physical possession of the hardware key is required. The hardware key approach may be combined with the password approach for added security.

An example of the use of a hardware key involves a Front Panel Programmable (FPP) two-way radio. Such a radio is capable of being programmed directly using the radio's own keypad and display. Since a commercial two-way radio is capable of transmitting on a large number of frequencies, including those used by police and public safety agencies, it is desirable to restrict access to the front panel programmable feature to minimize the impact of a malicious user. In fact, the Federal Communication Commission (FCC) requires radio manufacturers utilize a hardware key mechanism to control access to the FPP feature.

The addition of a hardware key to a portable communication device such as a two-way radio has, however, a number of disadvantages:
- The form factor of the device is altered. This may often make the device less comfortable to hold and use.
- The hardware key must be designed and tooled, which is costly, and changes in industrial design in successive products may preclude the re-use of the hardware key.
- The key requires the addition of a connector on the radio, or the key occupies an existing connector that can no longer be used for other purposes while the key is present. Radio accessories, for example, may be unusable if the hardware key occupies this connector.

Thus, it is highly desirable to implement an access control mechanism using a hardware key that is inexpensive to design and manufacture, does not alter the form factor of the device, and does not prevent the use of accessories or other capabilities. Therefore, the need exists for an access control system and method utilizing a key battery.

### BRIEF DESCRIPTION OF THE DRAWINGS

FIG. 1 shows a communication device consisting of a radio transceiver and a radio battery pack.
FIG. 2 is a block diagram of selected radio transceiver components and radio battery including a memory component.
FIG 3 is a flowchart in accordance with the present invention.

### DETAILED DESCRIPTION OF THE PREFERRED EMBODIMENT

While the specification concludes with claims defining the features of the invention that are regarded as novel, it is believed that the invention will be better understood from a consideration of the following description in conjunction with the drawing figures, in which like reference numerals are carried forward.

Portable communications devices today often utilize battery packs that contain one or more primary or secondary cells, a memory device, and sensors, such as for battery temperature. The memory device is typically a non-volatile device, such as a PROM or serial EEPROM. To minimize the number of electrical connections to the battery, serial devices are commonly utilized. The memory devices typically contain parameters about the battery, such as chemistry type, charging rates, etc. This information, which is generally programmed when the battery is manufactured, is used by the battery charger to properly and safely charge the battery. This information can also contain thresholds to be used by the radio to provide a multi-segment battery gauge, or "battery life remaining" indicator.

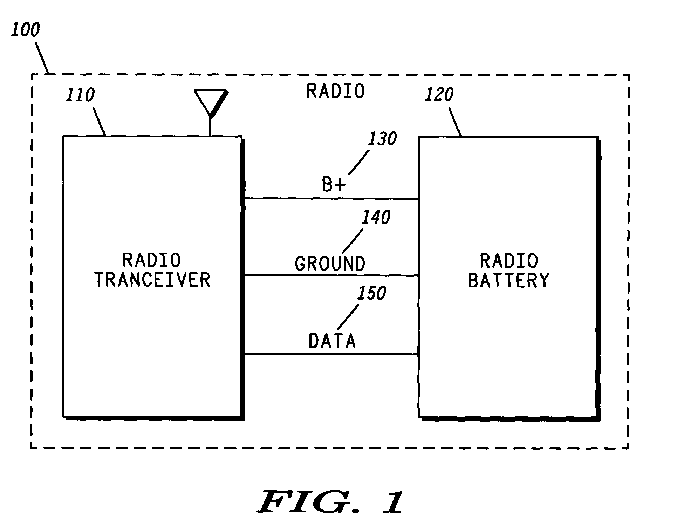

Referring now to FIG. 1, a portable communication device, or radio, consists of radio transceiver **110** which is powered by radio battery **120** which is typically included in a housing that is physically attached to the radio. A number of connections may exist between transceiver **110** and battery **120** , including ground connection **140** and battery voltage supply **130**. In addition, data connection **150** provides read capability for the radio to access stored information in radio battery **120**. Data connection 150 is sufficient for "one wire" serial memory devices, but those skilled in the art will recognize that some serial devices require multiple lines for clock, control signals, etc.

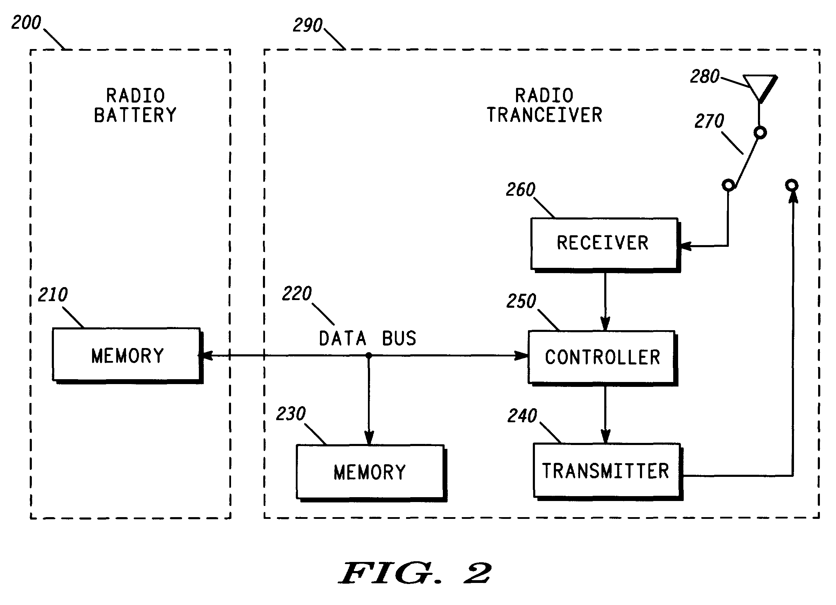

A block diagram of a typical portable radio is depicted in FIG 2. Referring now to FIG 2, a transceiver **290** consists of a receiver **260** and transmitter **240**, both connected to antenna **280** via antenna switch **270**. Receiver **260** and transmitter **240** are both connected to controller **250**, a microprocessor or similar device responsible for operating transceiver **290**. Controller **250** operates using memory **230**, which is accessed using data bus **220**.

Portable radio transceiver **290** is powered by Radio battery **200**, which contains memory device **210** that is also accessible by controller **250** on data bus **220**. It should be recognized that controller **250** may use both a serial and a parallel instantiation of data bus **220** to accommodate the various choices for the memory devices **210**, **230**.

In the preferred embodiment, memory device **210** in radio battery **200** is read-only. In an alternate embodiment memory device **210** is read/write capable, thus allowing the communication device or battery charger to update information in radio battery memory device **210**.

As previously explained, memory device **210** typically contains information about the operational characteristics about the battery, including charging information. Manufacturing information such as model number, serial number, and manufacturing date may also be present. In accordance with the present invention, battery memory device **210** also contains one or more sets of access control data or authorization "keys."

Each software key stored in battery memory device 210 corresponds to a restricted feature or capability of the communication device. Controller 250 is able to detect the presence of one or more software keys. Detected keys, which may optionally be encrypted are then validated. The presence of a given key permits access or use of a predetermined set of device functions, and the absence of the key denies access.

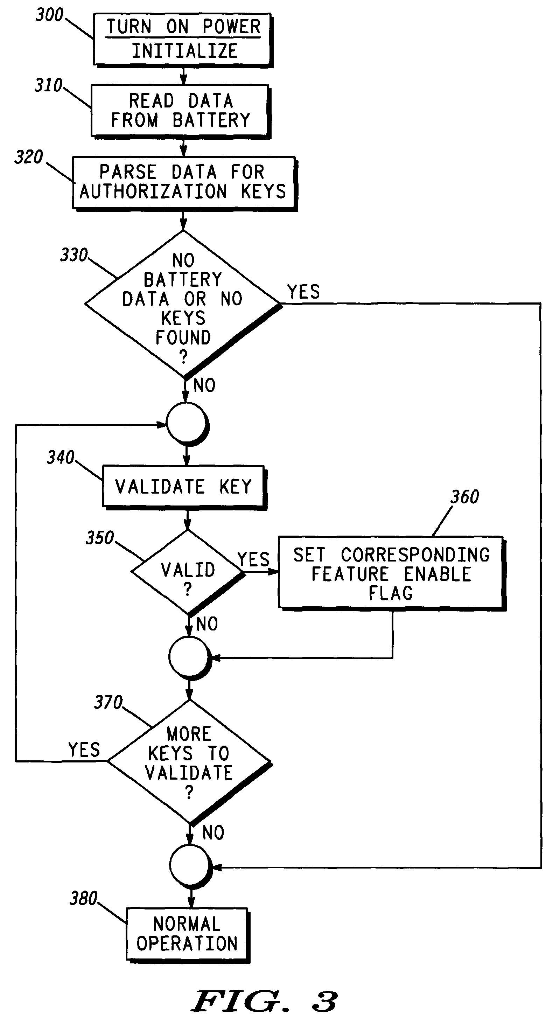

Figure 3 is a flowchart diagram depicting the detection and processing of battery keys in accordance with the present invention. When the communication device is powered on 300, the device performs initialization and self check tasks commonly associated with power-up of microprocessor-controlled devices. Upon completion of these tasks, the radio attempts to read data **310** from the attached battery. This battery data, if available, may contain one or more keys. Lack of battery data may indicate the use of a non-key battery, a third-party manufactured battery, or a malfunctioning battery. The radio then parses the data **320** received from the battery to determine if any keys are present. If no battery data is present, or if no battery keys are detected in the battery data 330, then normal operation **380** of the device begins without access being granted to any restricted features.

If battery data was read and at least one key was detected **330**, then the radio will validate **340** the first detected key. Validation involves decoding and possible decryption. If the key is validated **350**, then a feature enable flag is set corresponding to the validated key. A feature enable flag exists for every restricted feature or set of restricted features controlled by a key, and is used to enable the associated functionality in the radio. Upon setting of a feature validation flag **360**, or if the first detected key was not valid **350**, the radio determines if there are more keys to validate **370**. If more keys are present, then the validation process **340**, **350** is repeated for each additional key detected, and the feature enable flag corresponding to each validated key is enabled **360**. Once all detected keys have been validated normal operation **380** begins. Any restricted feature will now be accessible if the corresponded feature enable flag is set.

While the preferred embodiments of the invention have been illustrated and described, it will be clear that the invention is not so limited. Numerous modifications, changes, variations, substitutions and equivalents will occur to those skilled in the art without departing from the spirit and scope of the present invention as defined by the appended claims.

## Claims

1. An access control system for enabling functionality to a portable communications device comprising:
at least one battery for providing access control data to the portable communications device; and
at least one data connection between the at least one battery and the portable communications device for providing access control data to the portable communications device and enabling access to a predetermined set of device functions.

2. An access control system as in claim 1, wherein the portable communications device is a two-way radio.

3. An access control system as in claim 1, wherein the battery includes a housing that is physically attached to the portable communications device.

4. An access control system as in claim 1, wherein the access control data is a software key.

5. An access control system as in claim 4, wherein the software key is encrypted.

6. An access control system as in claim 1, wherein the at least one data connection is a separate terminal on the at least one battery.

7. An access control system as in claim 1, wherein the predetermined set of device functions includes front panel programming (FPP) using an attached keypad.
